# EUROPEAN PATENT SPECIFICATION

(11) **EP 3 902 408 B1**
(45) Date of publication and mention of the grant of the patent: **17.07.2024**
(21) Application number: 19839152.6
(22) Date of filing: 20.12.2019
(51) Int. Cl.: A23K 20/158, A23K 50/48, A23P 30/25, A23K 10/20, A23K 20/163, A23K 40/25, A23K 50/40, A23K 20/147

(54) **MULTI-TEXTURED PET FOODS COMPRISING METHYLCELLULOSE AND GELLING HYDROCOLLOIDS**
MULTISTRUKTURIERTES HAUSTIERFUTTER MIT METHYLCELLULOSE UND GELIERENDEN HYDROKOLLOIDEN
ALIMENTS POUR ANIMAUX DE COMPAGNIE À TEXTURES MULTIPLES COMPRENANT DE LA MÉTHYLCELLULOSE ET DES HYDROCOLLOÏDES GÉLIFIANTS

(30) Priority: 24.12.2018 US 201862784604 P
(43) Date of publication of application: 03.11.2021
(73) Proprietor: Société des Produits Nestlé S.A., 1800 Vevey (CH)
(72) Inventor: ROUANET, Laurent, 80800 Villers-Bretonneux (FR); WATELAIN, Annie, 80300 Lavieville (FR)
(74) Representative: Elkington and Fife LLP
(86) International application number: PCT/IB2019/061227
(87) International publication number: WO 2020/136534

(56) References cited:
- US-A- 4 143 168
- US-A1- 2004 131 745
- US-A1- 2014 170 268
- US-A1- 2014 242 228
- US-A1- 2017 347 694

## Description

This application claims priority to U.S. Provisional Application Serial No. 62/784,604 filed December 24, 2018.

### BACKGROUND

The present disclosure relates generally to pet foods having multiple textures. More specifically, the present disclosure is directed to pet foods comprising an edible emulsion comprising at least one protein, the pet foods further comprising a jelly comprising methylcellulose and one or more gelling hydrocolloids.

There are many pet food products on the market. The pet food products can be in a variety of shapes and structures such as kibbles, biscuits, rawhide products and meat emulsion products. Typically, these pet food products are homogenous in that they are usually made from the same materials throughout the product. Even pet food products that appear to be made from different base materials are usually made by providing the same base materials with different colors to give the pet food products a multi-component appearance. Multi-textured products are very attractive for consumers but challenging for manufacturers.
US 2014/01720268 A1 relates to chunky products for use in animal foods.
US 2004/0131745 A1 relates to a pet food composition containing a semi-refined gelling agent.
US 2014/0242228 A1 relates to a method for producing pet food compositions using alginate.
US 4,143,168 relates to a shaped blood by-product for use in pet food.
US 2017/0347694 A1 relates to gelling compositions and foods containing such gelling compositions.

Thus, there is a need in the industry for pet food products that have new and interesting textures and appearances to further stimulate consumer interest.

### SUMMARY

The invention relates to a method of making a multi-textured pet food product, the method comprising, preparing an edible emulsion comprising at least one protein, preparing a first gravy comprising methylcellulose and a low temperature gelling hydrocolloid, the low temperature gelling hydrocolloid being selected from the group consisting of cassia, gellan gum, kappa-carrageenan, locust bean gum, and mixtures thereof, co-extruding the edible emulsion and the first gravy to form an extrudate in which the edible emulsion is physically associated with the first gravy, and heating the extrudate using steam to jellify the first gravy into a jelly, wherein the heating of the extrudate using steam comprises subjecting the extrudate to a steam oven by which the extrudate reaches a temperature from about 50°C to about 70°C.

The invention further relates to a pet food product comprising one or more chunks of a steam-cooked edible emulsion comprising at least one protein, wherein each of the chunks is physically associated with a jelly comprising methylcellulose and a low temperature gelling hydrocolloid, the low temperature gelling hydrocolloid being selected from the group consisting of cassia, gellan gum, kappa-carrageenan, locust bean gum, and mixtures thereof, with the jelly being in at least one position selected from the group consisting of (i) in the interior of the corresponding chunk where the jelly is a distinct core at least partially enclosed by the corresponding chunk and (ii) as a distinct layer on an exterior surface of the corresponding chunk.

The invention further relates to a packaging comprising a sealed opening, wherein the packaging comprises a pet food product comprising one or more chunks of a steam-cooked edible emulsion comprising at least one protein, each of the chunks is physically associated with a jelly, wherein the jelly comprises methylcellulose and a low temperature gelling hydrocolloid, the low temperature gelling hydrocolloid being selected from the group consisting of cassia, gellan gum, kappa-carrageenan, locust bean gum, and mixtures thereof, with the jelly being in at least one position selected from the group consisting of (i) in the interior of the corresponding chunk where the jelly is a distinct core at least partially enclosed by the corresponding chunk and (ii) as a distinct layer on an exterior surface of the corresponding chunk.

Additional features and advantages are described herein, and will be apparent from the following Detailed Description and the Figures.

### BRIEF DESCRIPTION OF THE FIGURES

**FIG. 1** is a graph of gravy viscosity vs. temperature for different gravy compositions according to Example 1.
**FIG. 2** is a photograph of extrudate bands after steam cooking, as described in the second experimental example.
**FIG. 3** is a photograph of chunks containing a jelly heart, formed by cutting the cooked extrudate, as described in the second experimental example.
**FIG. 4** is a photograph of chunks containing a jelly heart after retorting, as described in the second experimental example.
**FIG. 5** is a photograph of a two-layer multi-textured pet food product from the third experimental example.
**FIG. 6** is a photograph of a three-layer multi-textured pet food product from the third experimental example.

### DETAILED DESCRIPTION

### Definitions

Some definitions are provided hereafter. Nevertheless, definitions may be located in the "Embodiments" section below, and the above header "Definitions" does not mean that such disclosures in the "Embodiments" section are not definitions.

As used in this disclosure and the appended claims, the singular forms "a," "an" and "the" include plural referents unless the context clearly dictates otherwise. Thus, for example, reference to "a meat" includes two or more meats.

The term "and/or" used in the context of "X and/or Y" should be interpreted as "X," or "Y," or "both X and Y." Similarly, "at least one of X or Y" should be interpreted as "X," or "Y," or "both X and Y." Where used herein, the terms "example" and "such as," particularly when followed by a listing of terms, are merely exemplary and illustrative and should not be deemed to be exclusive or comprehensive. Any embodiment disclosed herein can be combined with any other embodiment disclosed herein unless explicitly stated otherwise.

The words "comprise," "comprises" and "comprising" are to be interpreted inclusively rather than exclusively. Likewise, the terms "include," "including" and "or" should all be construed to be inclusive, unless such a construction is clearly prohibited from the context.

However, the compositions disclosed herein may lack any element that is not specifically disclosed. Thus, a disclosure of an embodiment using the term "comprising" includes a disclosure of embodiments "consisting essentially of" and "consisting of" the components identified. Similarly, the methods disclosed herein may lack any step that is not specifically disclosed herein. Thus, a disclosure of an embodiment using the term "comprising" includes a disclosure of embodiments "consisting essentially of" and "consisting of" the steps identified. "Consisting essentially of" means that the embodiment comprises more than 50 wt.% of the identified components, preferably at least 75 wt.% of the identified components, more preferably at least 85 wt.% of the identified components, most preferably at least 95 wt.% of the identified components, for example at least 99 wt.% of the identified components.

As used herein, "about," "approximately" and "substantially" are understood to refer to numbers in a range of numerals, for example the range of -10% to +10% of the referenced number, preferably within -5% to +5% of the referenced number, more preferably within -1% to +1% of the referenced number, most preferably within -0.1% to +0.1% of the referenced number. Furthermore, all numerical ranges herein should be understood to include all integers, whole or fractions, within the range. Moreover, these numerical ranges should be construed as providing support for a claim directed to any number or subset of numbers in that range. For example, a disclosure of from 1 to 10 should be construed as supporting a range of from 1 to 8, from 3 to 7, from 1 to 9, from 3.6 to 4.6, from 3.5 to 9.9, and so forth.

All percentages expressed herein are by weight of the total weight of the composition unless expressed otherwise. When reference is made to the pH, values correspond to pH measured at 25 °C with standard equipment. Ambient temperature is between about 15°C and about 25°C, and ambient pressure is about 100 kPa.

The term "pet" means any animal which could benefit from or enjoy the compositions provided by the present disclosure. For example, the pet can be an avian, bovine, canine, equine, feline, hircine, lupine, murine, ovine, or porcine animal, but the pet can be any suitable animal. The term "companion animal" means a dog or a cat.

The terms "food," "food product" and "food composition" mean a product or composition that is intended for ingestion by an animal, including a human, and provides at least one nutrient to the animal. The term "pet food" means any food composition intended to be consumed by a pet. A "dry" food composition has less than 10 % by weight moisture and/or a water activity less than 0.64, preferably both. A "semi-moist" food composition has 11 % by weight to 20 % by weight moisture and/or a water activity of 0.64 to 0.75, preferably both. A "wet" food composition has more than 20 % by weight moisture and/or a water activity higher than 0.75, preferably both.

As used herein, "co-extrusion" means any process that directs at least two materials through the same extrusion die to produce a unitary piece. The extrusion die typically comprises extrusion conduits, e.g., cylindrical conduits, generally oriented in the same direction as the streams of material to be extruded. The shape of the material after it exits the extruder may be determined in particular by the shape of the orifice of the corresponding conduit, and the positioning of the materials relative to each other can be determined by the positioning of the conduit in the die. For example, a product containing a filling can be made by directing the filling composition through a central conduit that is circumscribed by one or more other conduits through which the shell or casing is extruded. As another example, a layered composition can be made by directing a food material through a conduit directly above or below a conduit for another food material.

Unless defined otherwise, all technical and scientific terms, terms of art, and acronyms used herein have the meanings commonly understood by one of ordinary skill in the art in the field(s) of the present disclosure or in the field(s) where the term is used. Although any compositions, methods, articles of manufacture, or other means or materials similar or equivalent to those described herein can be used, the preferred devices, methods, articles of manufacture, or other means or materials are described herein.

### Embodiments

The present inventors note that heating a gravy containing a low temperature gelling hydrocolloid such as cassia, gellan gum, kappa-carrageenan, locust bean gum, or mixtures thereof above 65°C will activate the low temperature gelling hydrocolloid. Nevertheless, the gelling agents are still liquid, so forming a jelly requires lowering the temperature of the composition. Moreover, the jelly is reversible, and consequently the jelly turns into a gravy during retorting (at around 125°C) and thus does not keep its shape. On the other hand, heating a gravy with methylcellulose above 60°C will turn the gravy into a jelly, but it is reversible such that the jelly returns to a liquid (gravy) form during cooling. As a result, it has not been possible to produce a multi-textured pet food containing an emulsion chunk and a jelly heart or a jelly layer from a process that uses retorting.

The present inventors surprisingly found that the functionality of methylcellulose could be advantageously combined with the functionality of the r low temperature gelling hydrocolloid cassia, gellan gum, kappa-carrageenan, locust bean gum or mixtures thereof, and implemented in a retorted multi-textured pet food; specifically, the ability of methylcellulose to jellify at hot temperatures (around 60°C) and the ability of a low temperature gelling hydrocolloid to be activated during heating and to form a jelly upon cooling. Thus, the combination of methylcellulose and a low temperature gelling hydrocolloid can provide a jelly at hot and cold temperatures. For example, this functionality can be used to achieve double-textured steam oven emulsion chunks having a jelly heart (i.e., a distinct core of jelly) or a distinct jelly layer by using the combination of low temperature gelling hydrocolloids (e.g. cassia, gellan gum, kappa-carrageenan, locust bean gum or mixtures thereof) with methylcellulose.

As set forth in greater detail later herein, viscosity analysis was performed for three different gravies containing methylcellulose. The results clearly show that between 55°C and 60°C, the gravy is jellified very quickly. Advantageously, the gravy is jellified during retorting (around 125°C) so the shape is maintained and, for a co-extruded jelly heart, the jelly is still in the heart after retorting. Additionally, for embodiments in which the chunks are dispersed in a second gravy, the gelling agents don't migrate into the second gravy surrounding the chunks associated with the jelly.

The present invention relates to a method of making a multi-textured pet food, the method comprising: preparing an edible emulsion comprising at least one protein, preparing a first gravy comprising methylcellulose and a low temperature gelling hydrocolloid, the low temperature gelling hydrocolloid being selected from the group consisting of cassia, gellan gum, kappa-carrageenan, locust bean gum, and mixtures thereof, co-extruding the edible emulsion and the first gravy to form an extrudate in which the edible emulsion is physically associated with the first gravy, and heating the extrudate using steam to jellify the first gravy into a jelly. The heating of the extrudate using steam comprises subjecting the extrudate to a steam oven by which the extrudate reaches a temperature from about 50°C to about 70°C

The low temperature gelling hydrocolloid is selected from the group consisting of cassia, gellan gum, kappa-carrageenan, locust bean gum and mixtures thereof. In some embodiments, the first gravy further comprises guar.

In some embodiments of the method, the methylcellulose is present in the first gravy in an amount from about 0.5 % by weight to about 2.0 % by weight. In one embodiment, the methylcellulose is present in the first gravy in an amount from about 1.2 % by weight to about 1.8 % by weight. In another embodiment, the methylcellulose is present in the first gravy in an amount from about 1.4 % by weight to about 1.6 % by weight. In some embodiments, the methylcellulose is present in the first gravy in an amount of about 0.5 % by weight, 0.6 % by weight, 0.7 % by weight, 0.8 % by weight, 0.9 % by weight, 1.0 % by weight, 1.1 % by weight, 1.2 % by weight, 1.3 % by weight, 1.4 % by weight, 1.5 % by weight, 1.6 % by weight, 1.7 % by weight, 1.8 % by weight, 1.9 % by weight, or 2.0 % by weight.

In some embodiments of the method, the low temperature gelling hydrocolloid is present in the first gravy in an amount from about 0.3 % by weight to about 1.5 % by weight. In another embodiment, the low temperature gelling hydrocolloid is present in the first gravy in an amount from about 0.3 % by weight to about 1.0 % by weight. In another embodiment, the low temperature gelling hydrocolloid is present in the first gravy in an amount from about 0.5 % by weight to about 1.0 % by weight. In some embodiments, the low temperature gelling hydrocolloid is present in the first gravy in an amount of 0.3 % by weight, 0.4 % by weight, 0.5 % by weight, 0.6 % by weight, 0.7 % by weight, 0.8 % by weight, 0.9 % by weight, 1.0 % by weight, 1.1 % by weight, 1.2 % by weight, 1.3 %, 1.4 % by weight, or 1.5 % by weight. In one embodiment, the low temperature gelling hydrocolloid is present in the first gravy in an amount of about 0.7 % by weight. In some embodiments, the low temperature gelling hydrocolloid is cassia. In some embodiments, the cassia is present in the first gravy in an amount from about 0.3 % by weight to about 1.5 % by weight. In another embodiment, the cassia is present in the first gravy in an amount from about 0.3 % by weight to about 1.0 % by weight. In another embodiment, the cassia is present in the first gravy in an amount from about 0.5 % by weight to about 1.0 % by weight. In some embodiments, the cassia is present in the first gravy in an amount of 0.3 % by weight, 0.4 % by weight, 0.5 % by weight, 0.6 % by weight, 0.7 % by weight, 0.8 % by weight, 0.9 % by weight, 1.0 % by weight, 1.1 % by weight, 1.2 % by weight, 1.3 %, 1.4 % by weight, or 1.5 % by weight. In one embodiment, the cassia is present in the first gravy in an amount of about 0.7 % by weight. In some embodiments, the low temperature gelling hydrocolloid is kappa-carrageenan. In some embodiments, the kappa-carrageenan is present in the first gravy in an amount from about 0.3 % by weight to about 1.5 % by weight. In another embodiment, the kappa-carrageenan is present in the first gravy in an amount from about 0.3 % by weight to about 1.0 % by weight. In another embodiment, the kappa-carrageenan is present in the first gravy in an amount from about 0.5 % by weight to about 1.0 % by weight. In some embodiments, the kappa-carrageenan is present in the first gravy in an amount of 0.3 % by weight, 0.4 % by weight, 0.5 % by weight, 0.6 % by weight, 0.7 % by weight, 0.8 % by weight, 0.9 % by weight, 1.0 % by weight, 1.1 % by weight, 1.2 % by weight, 1.3 %, 1.4 % by weight, or 1.5 % by weight. In one embodiment, the kappa-carrageenan is present in the first gravy in an amount of about 0.7 % by weight. In some embodiments, the low temperature gelling hydrocolloid is gellan gum. In some embodiments, the gellan gum is present in the first gravy in an amount from about 0.3 % by weight to about 1.5 % by weight. In another embodiment, the gellan gum is present in the first gravy in an amount from about 0.3 % by weight to about 1.0 % by weight. In another embodiment, the gellan gum is present in the first gravy in an amount from about 0.5 % by weight to about 1.0 % by weight. In some embodiments, the gellan gum is present in the first gravy in an amount of 0.3 % by weight, 0.4 % by weight, 0.5 % by weight, 0.6 % by weight, 0.7 % by weight, 0.8 % by weight, 0.9 % by weight, 1.0 % by weight, 1.1 % by weight, 1.2 % by weight, 1.3 %, 1.4 % by weight, or 1.5 % by weight. In one embodiment, the gellan gum is present in the first gravy in an amount of about 0.7 % by weight. In some embodiments, the low temperature gelling hydrocolloid is locust bean gum. In some embodiments, the locust bean gum is present in the first gravy in an amount from about 0.3 % by weight to about 1.5 % by weight. In another embodiment, the locust bean gum is present in the first gravy in an amount from about 0.3 % by weight to about 1.0 % by weight. In another embodiment, the locust bean gum is present in the first gravy in an amount from about 0.5 % by weight to about 1.0 % by weight. In some embodiments, the locust bean gum is present in the first gravy in an amount of 0.3 % by weight, 0.4 % by weight, 0.5 % by weight, 0.6 % by weight, 0.7 % by weight, 0.8 % by weight, 0.9 % by weight, 1.0 % by weight, 1.1 % by weight, 1.2 % by weight, 1.3 %, 1.4 % by weight, or 1.5 % by weight. In one embodiment, the locust bean gum is present in the first gravy in an amount of about 0.7 % by weight. In some embodiments, the low temperature gelling hydrocolloid is a mixture. For example, the low temperature gelling hydrocolloid is a mixture of cassia and gellan gum, cassia and kappa-carrageenan, or cassia and locust bean gum. In some embodiments, the low temperature gelling hydrocolloid is a mixture of gellan gum and kappa-carrageenan or gellan gum and locust bean gum. In one embodiment, the low temperature gelling hydrocolloid is a mixture of kappa-carrageenan and locust bean gum. In some embodiments, the low temperature gelling hydrocolloid mixture is present in the first gravy in an amount from about 0.3 % by weight to about 1.5 % by weight. In another embodiment, the low temperature gelling hydrocolloid mixture is present in the first gravy in an amount from about 0.3 % by weight to about 1.0 % by weight. In another embodiment, the low temperature gelling hydrocolloid mixture is present in the first gravy in an amount from about 0.5 % by weight to about 1.0 % by weight. In some embodiments, the low temperature gelling hydrocolloid mixture is present in the first gravy in an amount of 0.3 % by weight, 0.4 % by weight, 0.5 % by weight, 0.6 % by weight, 0.7 % by weight, 0.8 % by weight, 0.9 % by weight, 1.0 % by weight, 1.1 % by weight, 1.2 % by weight, 1.3 %, 1.4 % by weight, or 1.5 % by weight. In one embodiment, the low temperature gelling hydrocolloid mixture is present in the first gravy in an amount of about 0.7 % by weight.

In some embodiments of the method, guar is present in the first gravy in an amount from about 0.5 % by weight to about 2.0 % by weight. In some embodiments, the guar is present in the first gravy in an amount from about 1.0 % by weight to about 2.0 % by weight. In some embodiments, the guar is present in the first gravy in an amount from about 1.2 % by weight to about 1.8 % by weight. In one embodiment, the guar is present in the first gravy in an amount of 0.5 % by weight, 0.6 % by weight, 0.7 % by weight, 0.8 % by weight, 0.9 % by weight, 1.0 % by weight, 1.1 % by weight, 1.2 % by weight, 1.3 % by weight, 1.4 % by weight, 1.5 % by weight, 1.6 % by weight, 1.7 % by weight, 1.8 % by weight, 1.9 % by weight or 2.0 % by weight.

In some embodiments of the method, the first gravy further comprises a salt. In one embodiment, the salt is potassium chloride. In some embodiments, the salt is present in the first gravy in an amount from about 0.01% to about 1.0 % by weight. In another embodiment, the salt is present in an amount from about 0.2 % by weight to about 0.5 % by weight. In one embodiment, the salt is present in an amount of about 0.3 % by weight. In one embodiment, the salt is potassium chloride and is present in an amount from about 0.2 % by weight to about 0.5 % by weight.

In some embodiments of the method, the first gravy further comprises a sugar. In one embodiment, the sugar is burnt sugar. In some embodiments, the sugar is present in the first gravy in an amount from about 0.01 % by weight to about 2.0 % by weight

A non-limiting example of a first gravy recipe for jellification in a multi-textured pet food according to the present disclosure comprises from about 0.5 % by weight to about 2.0 % by weight guar, from about 0.5 % by weight to about 2.0 % by weight methylcellulose and further includes from about 0.3 % by weight to about 1.0 % by weight kappa-carrageenan or from about 0.3 % by weight to about 1.0 % by weight cassia or from about 0.3 % by weight to 1.0 % by weight locust bean gum, and further includes from about 0.01 % by weight to 1.0 % by weight potassium chloride, and from about 0.01 % by weight to 2.0 % by weight burnt sugar (relative to the gravy).

In some embodiments, the combination of methylcellulose and galactomannan, e.g. guar gum, enables the onset and/or completion of the jellification of the first gravy at a lower temperature. For example, the combination of methylcellulose and guar provides an onset of jellification from about 55°C to about 65°C. In other embodiments, the combination of methylcellulose and guar provides an onset of jellification at about 55°C, about 60°C or about 65°C. In some embodiments, the combination of methylcellulose and galactomannan, e.g. guar gum, provides complete of jellification at a lower temperature. In some embodiments, with the combination of methylcellulose and guar the jellification is substantially complete at about 65°C, about 70°C or about 75°C. The heating of the extrudate using steam comprises subjecting the extrudate comprising the emulsion and associated gravy to a steam oven. The extrudate is heated to a temperature from about 50°C to about 70°C. In another embodiment, the extrudate is heated to a temperature from about 55°C to about 65°C. In one embodiment, the extrudate is heated to a temperature of about 60°C.

In an embodiment, the first gravy is prepared at a temperature up to about 30°C. In another embodiment, the first gravy is prepared at a temperature up to about 25°C or 26°C, for example ambient temperature.

An aspect of the present disclosure is a method of preparing a multi-textured pet food, the method comprising preparing a first gravy comprising methylcellulose and a low temperature gelling hydrocolloid, at a temperature up to about 30°C or at a temperature up to about 25°C, for example, ambient temperature; preparing an edible emulsion comprising at least one protein; co-extruding the first gravy with the edible emulsion to form an extrudate comprising the first gravy and the edible emulsion, with at least a portion of the gravy inside of the edible emulsion (e.g., as a distinct filling) or positioned on an external surface of the edible emulsion (e.g., as a distinct layer); and subjecting the extrudate to cooking using steam (e.g., in a steam oven) to heat the extrudate to a temperature of about 50°C to about 70°C. The method can further comprise cutting the cooked extrudate into pieces of cooked extrudate having a predetermined size, i.e., "chunks" physically associated with the jelly, preferably a heart of the jelly and/or a layer of the jelly. Then the chunks physically associated the jelly can be sterilized, for example by filling the chunks physically associated with the jelly through an opening of a packaging into an interior of the packaging, sealing the packaging containing the chunks physically associated with the jelly, and then retorting the sealed packaging, for example by heat treatment at a temperature from about 121°C to about 128°C for about 10 to about 60 minutes. In some embodiments, a second gravy which does not have the capacity to jellify at high or low temperatures (e.g. a gravy that does not contain methylcellulose or a low temperature gelling hydrocolloid or mixtures thereof) is placed into the packaging comprising the chunks associated with jelly prior to sealing and retorting the sealed packaging. In some embodiments, the methylcellulose and the low temperature gelling hydrocolloids remain in the jelly heat and do not disperse to any appreciable extent into the second gravy after sealing the packaging or during the retorting of the sealed packaging.

The term "chunks" means a plurality of separate food bodies preferably made by slicing separate pieces of an edible emulsion prepared by emulsifying a meat and/or a non-meat protein (e.g., a vegetable protein) in water. In some embodiments, the chunks are pieces of wet or semi-moist pet food. Non-limiting examples of suitable meats include poultry, beef, pork, fish and mixtures thereof. Non-limiting examples of suitable non-meat proteins include wheat protein (e.g., whole grain wheat or wheat gluten such as vital wheat gluten), corn protein (e.g., ground corn or corn gluten), soy protein (e.g., soybean meal, soy concentrate, or soy isolate), rice protein (e.g., ground rice or rice gluten), cottonseed, peanut meal, pea protein, egg albumin, milk proteins, and mixtures thereof.

The low temperature gelling hydrocolloid used in the first gravy in combination with the methylcellulose is selected from the group consisting of cassia, gellan gum, kappa-carrageenan, locust bean gum and mixtures thereof. In some embodiments, the mixture comprises two or more low temperature gelling hydrocolloids or three or more low temperature gelling hydrocolloids. In an embodiment, the first gravy optionally further comprises one or more edible ingredients in addition to the methylcellulose and low temperature gelling hydrocolloid, for example, one or more flavors such as chicken flavor, beef flavor, fish flavor, vegetable flavor, or burnt sugar; one or more colorants; one or more visible nutrition ingredients such as spinach, carrots, or cranberries; and/or one or more condiments such as parsley or oregano. In some embodiments, the additional edible ingredients are added to the first gravy before, during or after the addition of the methylcellulose and the low temperature gelling hydrocolloid.

The viscosity and/or the density of the first gravy can be substantially the same as that of the edible emulsion to keep the first gravy and the edible emulsion separated before and during cooking.

Another aspect of the present invention is a multi-textured pet food that can be made by this method. The pet food comprises one or more chunks of a steam-cooked edible emulsion comprising at least one protein, each of the chunks is physically associated with a jelly, wherein the jelly comprises methylcellulose and a low temperature gelling hydrocolloid, the low temperature gelling hydrocolloid being selected from the group consisting of cassia, gellan gum, kappa-carrageenan, locust bean gum, and mixtures thereof, with the jelly being in at least one position selected from the group consisting of (i) in the interior of the corresponding chunk where the jelly is a distinct core at least partially enclosed by the corresponding chunk, and (ii) as a distinct layer on an exterior surface of the corresponding chunk.

In an embodiment, the jelly is clear and transparent. In an embodiment, the pet food product has been retorted. The low temperature gelling hydrocolloid is selected from the group consisting of cassia, gellan gum, kappa-carrageenan, locust bean gum and mixtures thereof.

In an embodiment, the multi-textured pet food comprises at least one of the one or more chunks comprising the steam-cooked edible emulsion as a first layer, the jelly comprising the methylcellulose and the low temperature gelling hydrocolloid as a distinct second layer on the first layer of the steam-cooked edible emulsion, and a second chunk comprising the steam-cooked edible emulsion as a distinct third layer on top of the layer of jelly.

In an embodiment, the at least one protein in the steam-cooked edible emulsion is at least partially provided by a meat present in the emulsion.

In an embodiment, the at least one protein in the steam-cooked edible emulsion comprises a vegetable protein. Alternatively or additionally, the at least one protein in the steam-cooked edible emulsion comprises a meat protein.

The pet food can have the jelly as a filling ("jelly heart") and/or as one or more layers. For example, a two-layered product can be made by co-extruding a strip of jelly onto a strip of edible emulsion. As another example, a three-layered product can be made by co-extruding a strip of jelly onto a strip of edible emulsion while co-extruding another strip of edible emulsion onto the strip of jelly. The strips of edible emulsion can be made from the same emulsion or a different emulsion relative to each other.

Also disclosed herein is a method of providing nutrition to a pet, such as a companion animal, by administering the multi-layered pet food disclosed herein. In some embodiments, the multi-layered pet food is formulated for a pet such as a companion animal, for example according to the standards of The Association of American Feed Control Officials (AAFCO).

Non-limiting examples of suitable packaging include metal cans (e.g., 3 oz. 85 g cans), plastic trays, tubs, seamed packaging (e.g., a seamed can in which a can end is interlocked with a can body), flexible pouches, glass jars, or retortable rigid plastic containers. The present disclosure is not limited to a specific embodiment of the packaging, and generally the packaging is any container that can receive the chunks of the cooked co-extruded edible emulsion and optionally gravy and then withstand retorting conditions.

Chunks can be meat analogs or non-meat analogs. "Meat analogs" are edible emulsion products that resemble chunks of natural meat in appearance, texture, and physical structure; meat analogs can contain meat or not contain meat. "Non-meat analogs" are edible emulsion products that resemble vegetables or fruits, for example potatoes zucchini, apples, carrots, eggplant or peppers, in appearance, texture, and physical structure; non-meat analogs can contain meat or may not contain meat.

The term "meat" means meat and meat by-products including carcass, bones, skin, offal, and muscle. Fresh meat may be obtained directly from a slaughterhouse and is often selected from poultry including chicken, turkey, duck and goose; fish including tuna, salmon, trout, and cod; ovines including lamb and sheep; bovines including cow, calf and veal; and porcines including pig and wild pig.

An embodiment of a suitable meat emulsion comprises a meat and a binder selected from the group consisting of plasma, whole egg powder, guar gum, pea fiber, pea protein, carboxymethylcellulose (CMC), a modified cereal starch, and mixtures thereof. In some embodiments, the binder is selected from the group consisting of (i) plasma alone without another binder, (ii) a combination of plasma and pea protein, (iii) a combination of plasma and pea fiber and (iv) a combination of plasma and CMC.

The edible emulsion can comprise a flour and thus can be a dough. If flour is used, it will also provide some protein. Therefore, a material can be used that is both a vegetable protein and a flour. A non-limiting example of a suitable flour is a starch flour, such as cereal flours, including flours from rice, wheat, corn, barley, and sorghum; root vegetable flours, including flours from potato, cassava, sweet potato, arrowroot, yam, and taro; and other flours, including sago, banana, plantain, and breadfruit flours. Another non-limiting example of a suitable flour is a legume flour, including flours from beans such as favas, lentils, mung beans, peas, chickpeas, and soybeans.

In some embodiments, the edible emulsion can comprise a fat such as an animal fat and/or a vegetable fat. In some embodiments, the fat source is an animal fat source, such as chicken fat, tallow or grease. Vegetable oils, such as corn oil, sunflower oil, safflower oil, rape seed oil, soy bean oil, olive oil and other oils rich in monounsaturated and polyunsaturated fatty acids, can be used additionally or alternatively. In some embodiments, a source of omega-3 fatty acids is included, such as one or more of fish oil, krill oil, flaxseed oil, walnut oil, or algal oil.

The edible emulsion can include other components in addition to the protein and optional flour, for example one or more of a vitamin, a mineral, a preservative, a colorant or a palatant.

Non-limiting examples of suitable vitamins include vitamin A, any of the B vitamins, vitamin C, vitamin D, vitamin E, and vitamin K, including various salts, esters, or other derivatives of the foregoing. Non-limiting examples of suitable minerals include calcium, phosphorous, potassium, sodium, iron, chloride, boron, copper, zinc, magnesium, manganese, iodine, selenium, and the like.

Non-limiting examples of suitable preservatives include potassium sorbate, sorbic acid, sodium methyl para-hydroxybenzoate, calcium propionate, propionic acid, and combinations thereof. Non-limiting examples of suitable colorants include FD&C colors, such as blue no. 1, blue no. 2, green no. 3, red no. 3, red no. 40, yellow no. 5, yellow no. 6, and the like; natural colors, such as roasted malt flour, caramel coloring, annatto, chlorophyllin, cochineal, betanin, turmeric, saffron, paprika, lycopene, elderberry juice, pandan, butterfly pea and the like; titanium dioxide; and any suitable food colorant known to the skilled artisan. Non-limiting examples of suitable palatants include yeast, tallow, rendered animal meals (e.g., poultry, beef, lamb, and pork), flavor extracts or blends (e.g., grilled beef), animal digests, and the like.

The invention further relates to a packaging comprising a sealed opening and a pet food product, wherein the pet food product comprises one or more chunks of a steam-cooked edible emulsion comprising at least one protein, each of the chunks is physically associated with a jelly, wherein the jelly comprises methylcellulose and a low temperature gelling hydrocolloid, the low temperature gelling hydrocolloid being selected from the group consisting of cassia, gellan gum, kappa-carrageenan, locust bean gum, and mixtures thereof, with the jelly being in at least one position selected from the group consisting of (i) in the interior of the corresponding chunk where the jelly is a distinct core at least partially enclosed by the corresponding chunk, and (ii) as a distinct layer on an exterior surface of the corresponding chunk. The packaging can be retorted.

Also disclosed herein is a method of providing nutrition to a pet. The method comprises administering a pet food product to the pet, the pet food product comprising one or more chunks of a steam-cooked edible emulsion comprising at least one protein, each of the chunks is physically associated with a jelly, wherein the jelly comprises methylcellulose and a low temperature gelling hydrocolloid, with the jelly being in at least one position selected from the group consisting of (i) in the interior of the corresponding chunk where the jelly is a distinct core at least partially enclosed by the corresponding chunk, and (ii) as a distinct layer on an exterior surface of the corresponding chunk.

The method can also comprise opening a packaging containing the pet food product, the packaging can be retorted with the pet food product therein, and the administering of the pet food product comprises removing the pet food product from the packaging.

An advantage of one or more embodiments provided by the present disclosure is improved multi-textured food products for pets.

Another advantage of one or more embodiments provided by the present disclosure is methods of making improved multi-textured food products for pets.

Still another advantage of one or more embodiments provided by the present disclosure is pet foods having increased appeal to consumers and pets.

Yet another advantage of one or more embodiments provided by the present disclosure is multi-textured pet foods having a co-extruded jelly that is very clear and transparent after retorting.

Another advantage of one or more embodiments provided by the present disclosure is edible emulsion chunks having a new and unique cosmetic appearance.

Yet another advantage of one or more embodiments provided by the present disclosure is to maintain jellified structure throughout cooking and retorting.

### EXAMPLES

The following non-limiting examples are illustrative of embodiments provided by the present disclosure and advantages thereof.

### Reference Example 1

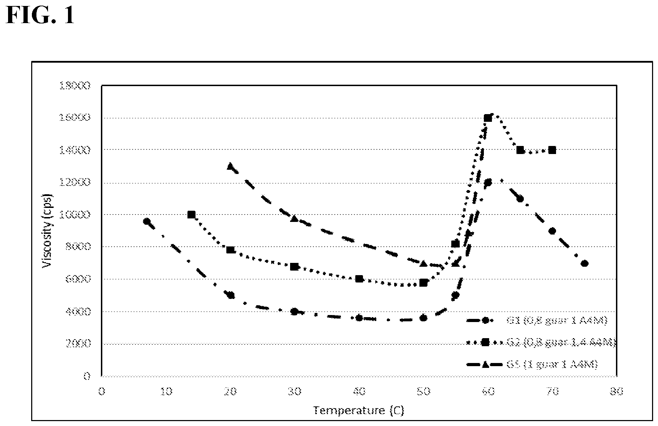

Viscosity analysis was performed on three different gravies having the same base formulation, including an aroma system, but containing different amounts of methylcellulose (Benecel A4M from Ashland) and guar gum. All gravies were prepared at an initial temperature from 20°C to 26°C. The first sample contained 1.0 % by weight methylcellulose and 0.8 % by weight guar gum. The second sample contained 1.4 % by weight methylcellulose and 0.8 % by weight guar gum. The third sample contained 1.0 % by weight methylcellulose and 1.0 % by weight guar gum. The graph in FIG 1. depicts the viscosity of the different gravies as a function of temperature and demonstrates the rapid jellification between 55°C and 60°C.

### Example 2

To simulate co-extrusion at kitchen scale, a syringe was used to create a gravy filling in a meat emulsion. The gravy filling comprised 1.4 wt.% guar, 1.0 wt.% methylcellulose, and a low temperature gelling hydrocolloid selected from 0.7 wt.% kappa-carrageenan or 0.7 wt.% cassia or 0.7 wt.% locust bean gum. The gravy additionally contained 0.3 wt.% potassium chloride and 1.0 wt.% burnt sugar.

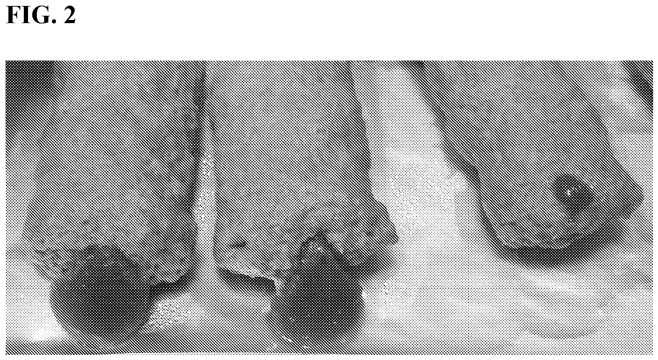

The meat emulsion with the gravy filling was subjected to steam oven cooking, and the resultant bands are shown in FIG. 2. As can be seen in the Figure, the gravy was well jellified after cooking.

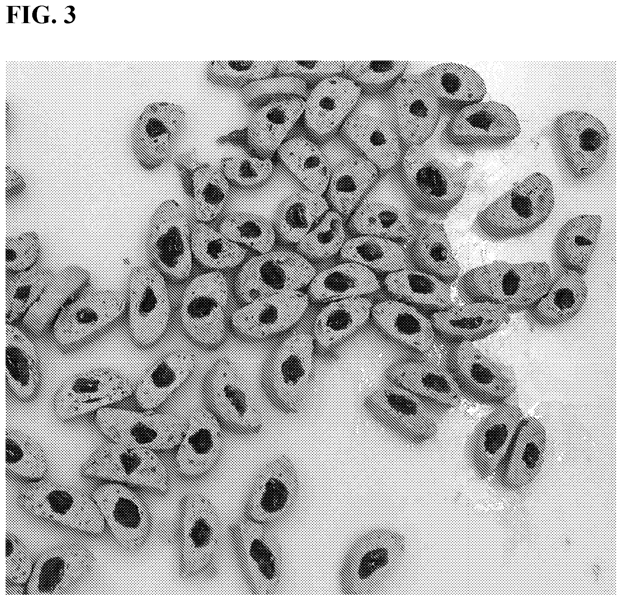

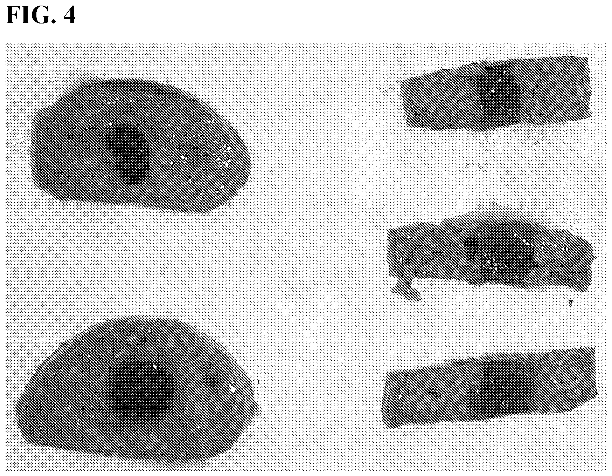

The bands were cut into chunks. Each chunk had a corresponding jelly heart, as shown in FIG. 3. After retorting, the jelly heart was still present in the chunks (FIG. 4).

### Example 3

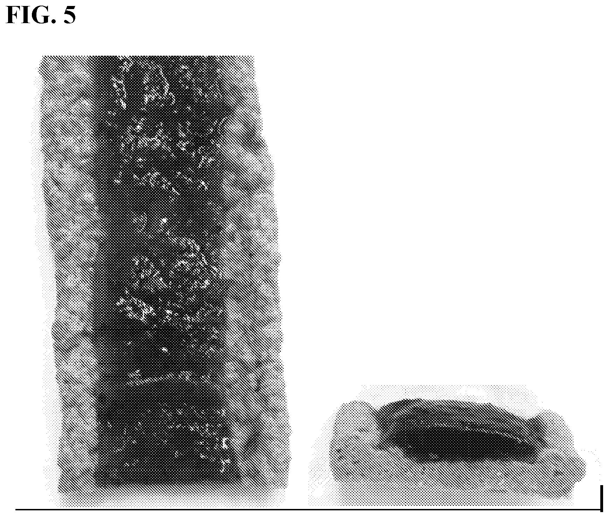

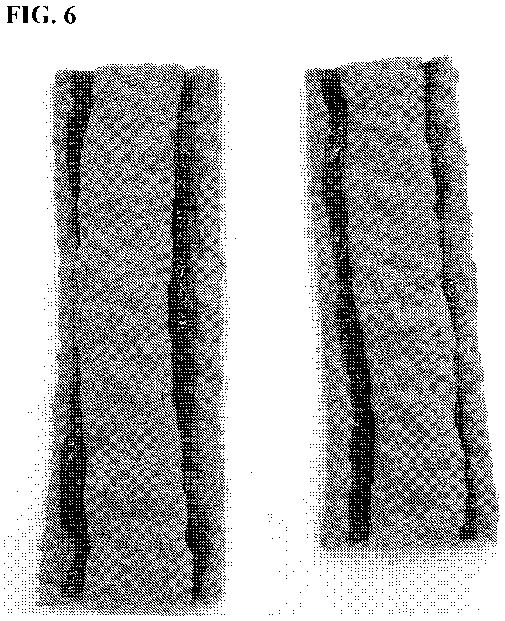

Kitchen trials investigated layered products and showed that advantageously the jelly after retorting was very clear and transparent. For example, a two-layered product was made having a strip of jelly containing spinach and extending along the top surface of a strip of edible emulsion (FIG. 5). As another example, a three-layered product was made having a strip of jelly extending along the top surface of a strip of edible emulsion and having another strip of edible emulsion extending along the top surface of the strip of jelly (FIG. 6).

## Claims

1. A method of making a multi-textured pet food product, the method comprising:
preparing an edible emulsion comprising at least one protein;
preparing a first gravy comprising methylcellulose and a low temperature gelling hydrocolloid, the low temperature gelling hydrocolloid being selected from the group consisting of cassia, gellan gum, kappa-carrageenan, locust bean gum, and mixtures thereof;
co-extruding the edible emulsion and the first gravy to form an extrudate in which the edible emulsion is physically associated with the first gravy; and
heating the extrudate using steam to jellify the first gravy into a jelly, wherein the heating of the extrudate using steam comprises subjecting the extrudate to a steam oven by which the extrudate reaches a temperature from 50°C to 70°C

2. The method of Claim 1, wherein the first gravy further comprises guar.

3. The method of Claim 1, wherein first gravy comprises methylcellulose in an amount from 0.5 % by weight to 2.0 % by weight

4. The method of Claim 1, wherein the low gelling temperature hydrocolloid is present in the first gravy in an amount from 0.3 % by weight to 1.5 % by weight

5. The method of Claim 1, wherein the first gravy further comprises a salt, preferably wherein the salt is present in an amount from about 0.01 % by weight to 1.0 % by weight

6. The method of Claim 1, wherein the first gravy further comprises a sugar, preferably wherein the sugar is present in an amount from 0.01 % by weight to 2.0 % by weight.

7. The method of Claim 1, comprising cutting the heated extrudate comprising the jelly into chunks, wherein the chunks comprise the jelly and have a predetermined size.

8. The method of Claim 7, further comprising filling the chunks through an opening of a packaging into an interior of the packaging.

9. The method of Claim 8, further comprising filling a second gravy through the opening of the packaging.

10. The method of Claim 9, wherein the second gravy does not comprise methylcellulose, a low temperature gelling hydrocolloid or mixtures thereof.

11. The method of Claim 8 or Claim 9, further comprising sealing the packaging comprising the chunks, preferably further comprising retorting the sealed packaging.

12. The method of Claim 1, wherein the first gravy is prepared at a temperature less than or 26°C.

13. A pet food product comprising one or more chunks of a steam-cooked edible emulsion comprising at least one protein, each of the chunks is physically associated with a jelly, wherein the jelly comprises methylcellulose and a low temperature gelling hydrocolloid, the low temperature gelling hydrocolloid being selected from the group consisting of cassia, gellan gum, kappa-carrageenan, locust bean gum, and mixtures thereof, with the jelly being in at least one position selected from the group consisting of (i) in the interior of the corresponding chunk where the jelly is a distinct core at least partially enclosed by the corresponding chunk, and (ii) as a distinct layer on an exterior surface of the corresponding chunk.

14. The pet food product of Claim 13, wherein one or more chunks each comprise a first layer of the steam-cooked edible emulsion, a distinct layer of the jelly on the first layer of the steam-cooked edible emulsion, and a second layer of the steam-cooked emulsion on the layer of the jelly.

15. The pet food product of Claim 13, wherein the at least one protein in the steam-cooked edible emulsion is at least partially provided by a meat present in the emulsion, or wherein the at least one protein in the steam-cooked edible emulsion comprises a vegetable protein.

16. A packaging comprising a sealed opening and a pet food product, wherein the pet food product comprises one or more chunks of a steam-cooked edible emulsion comprising at least one protein, each of the chunks is physically associated with a jelly, wherein the jelly comprises methylcellulose and a low temperature gelling hydrocolloid the low temperature gelling hydrocolloid being selected from the group consisting of cassia, gellan gum, kappa-carrageenan, locust bean gum, and mixtures thereof, with the jelly being in at least one position selected from the group consisting of (i) in the interior of the corresponding chunk where the jelly is a distinct core at least partially enclosed by the corresponding chunk, and (ii) as a distinct layer on an exterior surface of the corresponding chunk, preferably wherein the packaging has been retorted.

## Patentansprüche

1. Verfahren zum Herstellen eines multitexturierten Haustierfutterprodukts, das Verfahren umfassend:
Zubereiten einer essbaren Emulsion, umfassend mindestens ein Protein;
Zubereiten einer ersten Soße, umfassend Methylcellulose und Hydrokolloid mit niedriger Geliertemperatur, wobei das Hydrokolloid mit niedriger Geliertemperatur aus der Gruppe ausgewählt ist, bestehend aus Cassia, Gellangummi, Kappa-Carrageenan, Johannisbrotkernmehl und Mischungen davon;
Co-Extrudieren der essbaren Emulsion und der ersten Soße, um ein Extrudat auszubilden, in dem die essbare Emulsion der ersten Soße physisch zugeordnet ist; und
Erhitzen des Extrudats unter Verwendung von Dampf, um die erste Soße zu einem Gelee zu gelieren, wobei das Erhitzen des Extrudats unter Verwendung von Dampf ein Aussetzen des Extrudats einem Dampfofen umfasst, durch den das Extrudat eine Temperatur von 50 °C bis 70 °C erreicht.

2. Verfahren nach Anspruch 1, wobei die erste Soße ferner Guarbohne umfasst.

3. Verfahren nach Anspruch 1, wobei die erste Soße Methylcellulose in einer Menge von 0,5 Gew.-% bis 2,0 Gew.-% umfasst.

4. Verfahren nach Anspruch 1, wobei das Hydrokolloid mit niedriger Geliertemperatur in der ersten Soße in einer Menge von 0,3 Gew.-% bis 1,5 Gew.-% vorhanden ist.

5. Verfahren nach Anspruch 1, wobei die erste Soße ferner ein Salz umfasst, vorzugsweise wobei das Salz in einer Menge von 0,01 Gew.-% bis 1,0 Gew.-% vorhanden ist.

6. Verfahren nach Anspruch 1, wobei die erste Soße ferner einen Zucker umfasst, vorzugsweise wobei der Zucker in einer Menge von 0,01 Gew.-% bis 2,0 Gew.-% vorhanden ist.

7. Verfahren nach Anspruch 1, umfassend ein Schneiden des erhitzten Extrudats, umfassend das Gelee, in Stücke, wobei die Stücke das Gelee umfassen und eine zuvor bestimmte Größe aufweisen.

8. Verfahren nach Anspruch 7, ferner umfassend ein Einfüllen der Stücke durch eine Öffnung einer Verpackung hindurch in ein Inneres der Verpackung.

9. Verfahren nach Anspruch 8, ferner umfassend das Einfüllen einer zweiten Soße durch die Öffnung der Verpackung hindurch.

10. Verfahren nach Anspruch 9, wobei die zweite Soße keine Methylcellulose, kein Hydrokolloid mit niedriger Geliertemperatur oder Mischungen davon umfasst.

11. Verfahren nach Anspruch 8 oder 9, ferner umfassend ein Versiegeln der Verpackung, umfassend die Stücke, vorzugsweise ferner umfassend ein Autoklavieren der versiegelten Verpackung.

12. Verfahren nach Anspruch 1, wobei die erste Soße bei einer Temperatur von weniger als oder 26 °C zubereitet wird.

13. Haustierfutterprodukt, umfassend ein oder mehrere Stücke einer dampfgekochten essbaren Emulsion, umfassend mindestens ein Protein, wobei jedes der Stücke einem Gelee physisch zugeordnet ist, wobei das Gelee Methylcellulose und ein Hydrokolloid mit niedriger Geliertemperatur umfasst, wobei das Hydrokolloid mit niedriger Geliertemperatur aus der Gruppe ausgewählt ist, bestehend aus Cassia, Gellangummi, Kappa-Carrageenan, Johannisbrotkernmehl und Mischungen davon, wobei sich das Gelee in mindestens einer Position befindet, die aus der Gruppe ausgewählt ist, bestehend aus (i) in dem Inneren des entsprechenden Stücks, in dem das Gelee ein gesonderter Kern ist, der mindestens teilweise durch das entsprechende Stück umschlossen ist, und (ii) als eine gesonderte Schicht auf einer äußeren Oberfläche des entsprechenden Stücks.

14. Haustierfutterprodukt nach Anspruch 13, wobei ein oder mehrere Stücke jeweils eine erste Schicht der dampfgekochten essbaren Emulsion, eine gesonderte Schicht des Gelees auf der ersten Schicht der dampfgekochten essbaren Emulsion und eine zweite Schicht der dampfgekochten Emulsion auf der Schicht des Gelees umfassen.

15. Haustierfutterprodukt nach Anspruch 13, wobei das mindestens eine Protein in der dampfgekochten essbaren Emulsion mindestens teilweise durch ein Fleisch bereitgestellt wird, das in der Emulsion vorhanden ist, oder wobei das mindestens eine Protein in der dampfgekochten essbaren Emulsion ein pflanzliches Protein umfasst.

16. Verpackung, umfassend eine versiegelte Öffnung und ein Haustierfutterprodukt, wobei das Haustierfutterprodukt ein oder mehrere Stücke einer dampfgekochten essbaren Emulsion umfasst, umfassend mindestens ein Protein, wobei jedes der Stücke einem Gelee physisch zugeordnet ist, wobei das Gelee Methylcellulose und ein Hydrokolloid mit niedriger Geliertemperatur umfasst, wobei das Hydrokolloid mit niedriger Geliertemperatur aus der Gruppe ausgewählt ist, bestehend aus Cassia, Gellangummi, Kappa-Carrageenan, Johannisbrotkernmehl und Mischungen davon, wobei sich das Gelee in mindestens einer Position befindet, die aus der Gruppe ausgewählt ist, bestehend aus (i) in dem Inneren des entsprechenden Stücks, in dem das Gelee einen gesonderten Kern ausbildet, der mindestens teilweise durch das entsprechenden Stück umschlossen ist, und (ii) als eine getrennte Schicht auf einer äußeren Oberfläche des entsprechenden Stücks, vorzugsweise wobei die Verpackung autoklaviert wurde.

## Revendications

1. Procédé de fabrication d'un produit alimentaire pour animaux de compagnie à textures multiples, le procédé comprenant :
la préparation d'une émulsion comestible comprenant au moins une protéine ;
la préparation d'une première sauce comprenant de la méthylcellulose et un hydrocolloïde gélifiant à basse température, l'hydrocolloïde gélifiant à basse température étant choisi dans le groupe constitué de cassia, gomme gellane, kappa carraghénane, gomme de caroube et leurs mélanges ;
la coextrusion de l'émulsion comestible et de la première sauce pour former un extrudat dans lequel l'émulsion comestible est physiquement associée à la première sauce ; et
le chauffage de l'extrudat à l'aide la vapeur pour gélifier la première sauce en une gelée, dans lequel le chauffage de l'extrudat à l'aide de la vapeur comprend la soumission de l'extrudat à un four à vapeur par lequel l'extrudat atteint une température de 50 °C à 70 °C.

2. Procédé selon la revendication 1, dans lequel la première sauce comprend du guar.

3. Procédé selon la revendication 1, dans lequel la première sauce comprend de la méthylcellulose en une quantité allant de 0,5 % en poids à 2,0 % en poids.

4. Procédé selon la revendication 1, dans lequel l'hydrocolloïde gélifiant à basse température est présent dans la première sauce en une quantité de 0,3 % en poids à 1,5 % en poids.

5. Procédé selon la revendication 1, dans lequel la première sauce comprend en outre un sel, de préférence dans lequel le sel est présent en une quantité allant de 0,01 % en poids à 1,0 % en poids.

6. Procédé selon la revendication 1, dans lequel la première sauce comprend en outre un sucre, de préférence dans lequel le sucre est présent en une quantité allant de 0,01 % en poids à 2,0 % en poids.

7. Procédé selon la revendication 1, comprenant la découpe de l'extrudat chauffé comprenant la gelée en morceaux, dans lequel les morceaux comprennent la gelée et ont une taille prédéterminée.

8. Procédé selon la revendication 7, comprenant en outre le remplissage des morceaux à travers une ouverture d'un emballage dans un intérieur de l'emballage.

9. Procédé selon la revendication 8, comprenant en outre le remplissage d'une seconde sauce à travers l'ouverture de l'emballage.

10. Procédé selon la revendication 9, dans lequel la seconde sauce ne comprend pas de méthylcellulose, un hydrocolloïde gélifiant à basse température ou leurs mélanges.

11. Procédé selon la revendication 8 ou la revendication 9, comprenant en outre le scellage de l'emballage comprenant les morceaux, comprenant de préférence en outre la stérilisation en autoclave de l'emballage scellé.

12. Procédé selon la revendication 1, dans lequel la première sauce est préparée à une température inférieure à 26 °C.

13. Produit alimentaire pour animaux de compagnie comprenant un ou plusieurs morceaux d'une émulsion comestible cuite à la vapeur comprenant au moins une protéine, chacun des morceaux est physiquement associé à une gelée, dans lequel la gelée comprend de la méthylcellulose et un hydrocolloïde gélifiant à basse température, l'hydrocolloïde gélifiant à basse température étant choisi dans le groupe constitué de cassia, gomme gellane, kappa carraghénane, gomme de caroube et leurs mélanges, la gelée étant dans au moins une position choisie dans le groupe constitué par (i) à l'intérieur du morceau correspondant où la gelée est une partie centrale distincte au moins partiellement entourée du morceau correspondant et (ii) en tant que couche distincte sur une surface extérieure du morceau correspondant.

14. Produit alimentaire pour animaux de compagnie selon la revendication 13, dans lequel un ou plusieurs morceaux comprennent chacun une première couche de l'émulsion comestible cuite à la vapeur, une couche distincte de la gelée sur la première couche de l'émulsion comestible cuite à la vapeur, et une seconde couche de l'émulsion cuite à la vapeur sur la couche de la gelée.

15. Produit alimentaire pour animaux de compagnie selon la revendication 13, dans lequel l'au moins une protéine dans l'émulsion comestible cuite à la vapeur est au moins partiellement fournie par une viande présente dans l'émulsion, ou dans lequel l'au moins une protéine dans l'émulsion comestible cuite à la vapeur comprend une protéine végétale.

16. Emballage comprenant une ouverture scellée et un produit alimentaire pour animaux domestiques, dans lequel le produit alimentaire pour animaux domestiques comprend un ou plusieurs morceaux d'une émulsion comestible cuite à la vapeur comprenant au moins une protéine, chacun des morceaux est physiquement associé à une gelée, dans lequel la gelée comprend de la méthylcellulose et un hydrocolloïde gélifiant à basse température, l'hydrocolloïde gélifiant à basse température étant choisi dans le groupe constitué de cassia, gomme gellane, kappa carraghénane, gomme de caroube et leurs mélanges, la gelée étant dans au moins une position choisie dans le groupe constitué par (i) à l'intérieur du morceau correspondant où la gelée est une partie principale distincte au moins partiellement entourée du morceau correspondant et (ii) en tant que couche distincte sur une surface extérieure du morceau correspondant, de préférence dans lequel l'emballage a été stérilisé en autoclave.
